(19) **Europäisches Patentamt**
**European Patent Office**
**Office européen des brevets**

(11) **EP 3 314 688 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **16725503.3**

(22) Anmeldetag: **25.05.2016**

(51) Int Cl.:
*H01M 10/0525* (2010.01)    *H01M 10/42* (2006.01)
*H01M 10/44* (2006.01)    *H01M 10/48* (2006.01)
*H01M 6/50* (2006.01)

(86) Internationale Anmeldenummer:
**PCT/EP2016/061737**

(87) Internationale Veröffentlichungsnummer:
**WO 2016/206902 (29.12.2016 Gazette 2016/52)**

(54) **VERFAHREN ZUM STEUERN EINES REGENERATIONSVORGANGES EINER LITHIUMIONENBATTERIEZELLE, WELCHE EINE ANODE, EINE KATHODE UND EINE REGENERATIONSELEKTRODE UMFASST**

METHOD FOR CONTROLLING A REGENERATION PROCEDURE OF A LITHIUM BATTERY CELL WHICH COMPRISES AN ANODE, A CATHODE AND A REGENERATION ELECTRODE

PROCÉDÉ DE COMMANDE D'UN PROCESSUS DE RÉGÉNÉRATION D'UNE CELLULE DE BATTERIE AU LITHIUM-ION, QUI COMPREND UNE ANODE, UNE CATHODE ET UNE ÉLECTRODE DE RÉGÉNÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2015 DE 102015211935**

(43) Veröffentlichungstag der Anmeldung:
**02.05.2018 Patentblatt 2018/18**

(73) Patentinhaber: **Robert Bosch GmbH**
**70442 Stuttgart (DE)**

(72) Erfinder:
• **LANGE, Ulrich**
**72631 Aichtal (DE)**
• **ZIEGLER, Joerg**
**71277 Rutesheim (DE)**
• **HASENKOX, Ulrich**
**71254 Ditzingen (DE)**
• **COIS, Olivier**
**71394 Kernen (DE)**
• **DUFAUX, Thomas**
**70437 Stuttgart (DE)**

(56) Entgegenhaltungen:
**WO-A2-2008/002626    US-A1- 2013 029 207**

**Beschreibung**

Stand der Technik

Die vorliegende Erfindung betrifft ein Verfahren zum Steuern eines Regenerationsvorganges einer Lithiumionenbatteriezelle, welche eine Anode, eine Kathode und eine Regenerationselektrode umfasst.

Zur Umsetzung der Elektromobilität sind wiederaufladbare Batterien mit hoher bezogener Energiedichte sowie einer hohen zyklischen und kalendarischen Lebensdauer notwendig. Hierfür eignen sich insbesondere Lithiumionenbatterien mit darin enthaltenen Lithiumionenbatteriezellen. Als kalendarische Lebensdauer werden typischerweise etwa 10 Jahre gefordert. Zudem wird typischerweise eine Lebensdauer von mehr als 1000 Entladezyklen gefordert. Danach soll die verfügbare Kapazität der Batterie mindestens noch 80% der Ausgangskapazität betragen. Ein bekannter Alterungsmechanismus bei Lithiumionenbatteriezellen ist der Verlust an zyklierbarem Lithium durch unerwünschte Seitenreaktionen in der Lithiumionenbatteriezelle. Daraus resultiert ein Kapazitätsabfall der Lithiumionenbatteriezelle. Ein Verlust an zyklierbarem Lithium kann beispielsweise durch ein Wachstum einer SEI-Schicht (Solid Electrolyte Interface) auf einer Anode der Lithiumionenbatteriezellen während der Alterung der Batterie als Ursache haben. Da Lithium dadurch chemisch in der SEI-Schicht gebunden wird, steht es in dem chemischen Zyklus der Lithiumionenbatteriezelle nicht mehr zur Verfügung und das Kathodenmaterial kann nicht mehr vollständig lithiiert werden.

Um diesem Effekt entgegenzuwirken, werden moderne Lithiumionenbatteriezellen mit einer Regenerationselektrode ausgerüstet, durch welche ein Verlust von zyklierbarem Lithium ausgeglichen werden kann. Eine solche Batteriezelle ist beispielsweise aus der WO2008/002626 bekannt.

Offenbarung der Erfindung

Das erfindungsgemäße Verfahren zum Steuern eines Regenerationsvorganges einer Lithiumionenbatteriezelle, welche eine Anode, eine Kathode und eine zwischen der Anode und der Kathode positionierte und parallel zu Großflächen der Anode oder Kathode ausgerichtete Regenerationselektrode umfasst, umfasst ein Erfassen einer aktuellen Verfügbarkeit von zyklierbarem Lithium in der Anode, ein Erfassen einer aktuellen Verfügbarkeit von zyklierbarem Lithium in der Kathode, ein Durchleiten eines ersten Stromes zwischen der Anode und der Regenerationselektrode, bis die aktuelle Verfügbarkeit von zyklierbarem Lithium in der Anode einer angezielten Verfügbarkeit von zyklierbarem Lithium in der Anode entspricht, und ein Durchleiten eines zweiten Stromes zwischen der Kathode und der Regenerationselektrode, bis die aktuelle Verfügbarkeit von zyklierbarem Lithium in der Kathode einer angezielten Verfügbarkeit von zyklierbarem Lithium in der Kathode entspricht.

Durch das getrennte Erfassen der aktuellen Verfügbarkeit von zyklierbarem Lithium in der Anode und in der Kathode wird erreicht, dass sowohl die Anode als auch die Kathode nach Ausführung des Verfahrens einen optimalen Gehalt von zyklierbarem Lithium haben, der ebenfalls aufeinander abgestimmt ist. Somit wird eine langanhaltend hohe Kapazität der Lithiumionenbatteriezelle gewährleistet. Zyklierbares Lithium ist solches Lithium, welches in einer Form vorliegt, dass dieses dazu geeignet ist, zu den chemischen Reaktionen beizutragen, die ein Laden und ein Entladen der Lithiumionenbatteriezelle ermöglichen. Insbesondere ist die angezielte Verfügbarkeit von zyklierbarem Lithium eine ursprüngliche Verfügbarkeit von Lithium, die zu einem Lebensanfang der Lithiumionenbatteriezelle vorlag.

Die Unteransprüche zeigen bevorzugte Weiterbildungen der Erfindung.

Es ist vorteilhaft, wenn das Verfahren ferner ein Ermitteln einer Fehlmenge an zyklierbarem Lithium in der Anode umfasst, wobei erkannt wird, dass die aktuelle Verfügbarkeit von zyklierbarem Lithium in der Anode der angezielten Verfügbarkeit von zyklierbarem Lithium in der Anode entspricht, wenn das Durchleiten des ersten Stromes so lange erfolgt ist, bis die ermittelte Fehlmenge der Anode zugefügt wurde, und/oder ein Ermitteln einer Fehlmenge an zyklierbarem Lithium in der Kathode umfasst, wobei erkannt wird, dass die aktuelle Verfügbarkeit von zyklierbarem Lithium in der Kathode der angezielten Verfügbarkeit von zyklierbarem Lithium in der Kathode entspricht, wenn das Durchleiten des zweiten Stromes so lange erfolgt ist, bis die ermittelte Fehlmenge der Kathode zugefügt wurde. Dadurch, dass die Fehlmenge vorab ermittelt wird und somit die jeweils vorab ermittelte entsprechende Fehlmenge an Lithium der Anode und/oder der Kathode zugefügt wird, wird ein besonders präzises Wiederauffüllen von zyklierbarem Lithium in der Anode und/oder der Kathode erreicht und somit eine besonders hohe Kapazität der Lithiumionenbatteriezelle gewährleistet. Ein besonders genaues Abschätzen der aktuellen Verfügbarkeit von zyklierbarem Lithium in der Anode und in der Kathode wird ermöglicht, da durch das Vorabermitteln der Fehlmenge keine Echtzeitanforderungen bestehen.

Auch ist es vorteilhaft, wenn die aktuelle Verfügbarkeit von zyklierbarem Lithium in der Anode und/oder die aktuelle Verfügbarkeit von zyklierbarem Lithium in der Kathode basierend auf einem Gesundheitszustand oder einem Alterungszustand der Lithiumionenbatteriezelle ermittelt wird. Auf diese Weise wird ein besonders einfaches Abschätzen der aktuellen Verfügbarkeit von zyklierbarem Lithium ermöglicht, da eine Korrelation zwischen Gesundheitszustand bzw. Alterungszustand einer Lithiumionenbatteriezelle und deren Gehalt an zyklierbarem Lithium besteht.

Ferner ist es vorteilhaft, wenn die aktuelle Verfügbarkeit von zyklierbarem Lithium in der Anode basierend auf einer Änderung einer Kennlinie eines Anodenpotentials ermittelt wird und/oder die aktuelle Verfügbarkeit von zyklierbarem Lithium in der Kathode basierend auf einer Änderung einer Kennlinie eines Kathodenpotentials ermittelt wird. Insbesondere ist die Änderung dabei eine Verschiebung, eine Skalierung oder ein Endpunkt der jeweiligen Kennlinie. Auf diese Weise wird die aktuelle Verfügbarkeit von zyklierbarem Lithium besonders genau ermittelt. Die Kennlinie des Anodenpotentials ist dabei ein Potentialverlauf an der Anode über einen Ladezustand der Lithiumionenbatteriezelle hinweg. Selbiges gilt in entsprechender Weise für die Kennlinie des Kathodenpotentials.

Eine Batteriesteuerung, die dazu eingerichtet ist, das erfindungsgemäße Verfahren auszuführen, weist alle Vorteile des erfindungsgemäßen Verfahrens auf. Insbesondere ist es vorteilhaft, wenn die Batteriesteuerung eine Elektronik umfasst, die dazu eingerichtet ist, den ersten und den zweiten Strom mittels kommutierender Transistoren zu regeln. Auf diese Weise kann eine stabile Stromquelle erzeugt werden, und somit ein gleichmäßiges und somit präzise steuerbares Auffüllen von zyklierbarem Lithium erfolgen.

Ferner ist eine Batterie vorteilhaft, welche eine erfindungsgemäße Batteriesteuerung umfasst. Diese weist alle Vorteile der Batteriesteuerung auf.

Es ist vorteilhaft, wenn die Regenerationselektrode derart in der Lithiumionenbatteriezelle angeordnet ist, dass deren Potential zwischen einem Potential der Anode und einem Potential der Kathode liegt. Auf diese Weise wird vermieden, dass ein hohes Potential gegenüber der Anode und der Kathode aufgebaut werden muss, um sowohl Anode als auch Kathode mit zyklierbarem Lithium anzureichern.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1     eine Darstellung einer Lithiumionenbatteriezelle, auf welche das erfindungsgemäße Verfahren angewandt wird,

Figur 2     eine Darstellung von Kennlinien eines Anodenpotentials und Kennlinien eines Kathodenpotentials zu unterschiedlichen Alterungszuständen der Lithiumionenbatteriezelle, und

Figur 3     eine schematische Darstellung einer Lithiumionenbatteriezelle über deren Lebenszyklus hinweg bei einer beispielhaften Anwendung des erfindungsgemäßen Verfahrens.

Ausführungsformen der Erfindung

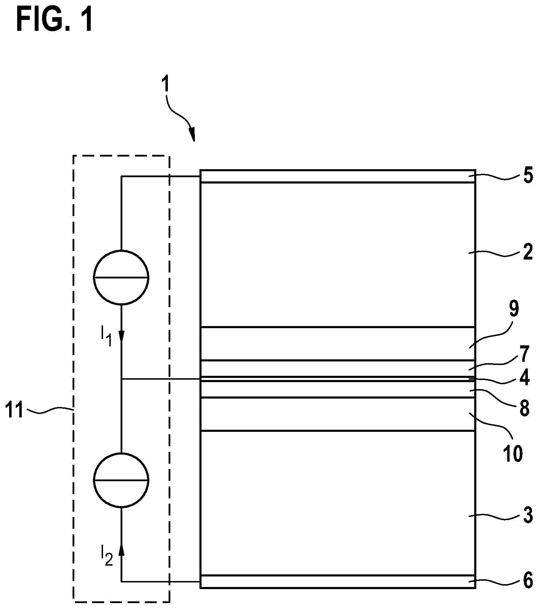

Figur 1 zeigt eine beispielhafte Lithiumionenbatteriezelle 1, auf welche das erfindungsgemäße Verfahren angewendet wird. Die Lithiumionenbatteriezelle 1 umfasst eine Anode 2, eine Kathode 3 und eine Regenerationselektrode 4.

Die Anode 2 ist eine Schicht, welche beispielsweise aus Graphit, Kohlenstoff, Silizium oder auch aus Kompositen aus diesen Stoffen in Verbindung mit einem polymeren Binder besteht. In die Anode 2 werden beim Laden der Batterie Lithiumionen eingelagert, die aus der Kathode 3 bezogen werden. Diese Lithiumionen werden der Anode 2 beim Entladen der Lithiumionenbatteriezelle 1 wieder entnommen.

Die Kathode 3 besteht bevorzugt aus einem Lithium-Übergangsmetalloxid, z.B. $LiNi_xMn_yCo_zO_2$, oder einem überlithiierten Lithium-Übergangsmetalloxid, z.B. $LiNi_xMn_yCo_zO_2*Li_2MnO_3$, oder einer anderen geeigneten Lithiumverbindung, welche Lithiumionen, andere Metallionen und Sauerstoff enthält, oder einem Lithiumübergangsmetallphosphat, z.B. $LiFePO_4$, und zudem aus Kohlenstoff sowie einem polymeren Binder. Aus der Kathode 3 werden beim Laden der Lithiumionenbatteriezelle 1 Lithiumionen aus dem Kristallgitter entnommen und in der Anode 2 eingelagert. Bei einem Entladen der Lithiumionenbatteriezelle 1 werden die Lithiumionen wieder in das Kristallgitter der Kathode 3 eingebaut.

Die Regenerationselektrode 4 dient als eine Lithiumquelle. Sie besteht bevorzugt aus metallischem Lithium, eventuell anderen Zusätzen aus Kohlenstoff, Polymeren, Keramiken oder Metallen sowie einem Stromableiter. Die Regenerationselektrode 4 kann auch als eine Lithiumelektrode bezeichnet werden. Alternativ können als Lithiumquelle in der Regenerationselektrode 4 auch andere lithiumhaltige Verbindungen verwendet werden, die Lithiumionen elektrochemisch abgeben können. Diese sind aber weniger geeignet, weil sie, bezogen auf deren Masse und das Volumen, eine schlechtere Energiedichte besitzen.

Die Lithiumionenbatteriezelle 1 ist schichtweise aufgebaut. Die unterschiedlichen Schichten der Lithiumionenbatteriezelle 1 liegen in folgender Reihenfolge aufeinander: Die oberste Schicht bildet ein Anodenkollektor 5, welcher als ein Stromableiter für die Anode 2 dient. Dann folgt die Anode 2, gefolgt von einem ersten Separator 9, gefolgt von einer ersten Schutzschicht 7. Unter der ersten Schutzschicht 7 liegt die Regenerationselektrode 4, gefolgt von einer zweiten Schutzschicht 8, auf welche wiederum ein zweiter Separator 10 folgt. Als nächste Schicht ist die Kathode 3 angeordnet, auf welche wiederum ein Kathodenkollektor 6 als abschließende Schicht folgt. Es sei darauf hingewiesen, dass die erste Schutzschicht 7 und die zweite Schutzschicht 8 als optionale Schutzschichten zu betrachten sind.

Der Anodenkollektor 5 sowie der Kathodenkollektor 6 ist jeweils eine metallische, elektrisch leitende Schicht, die über jeweils eine Zuleitung mit einer Batteriesteuerung 11 verbunden ist. Die Regenerationselektrode 4 ist ebenfalls über eine Zuleitung mit der Batteriesteuerung 11 verbunden. Die Batteriesteuerung 11 ist dazu eingerichtet, einen ersten Strom $I_1$ zwischen der Regenerationselektrode 4 und dem Anodenkollektor 5 fließen zu lassen. Dazu umfasst die Batteriesteuerung 11 eine erste Stromquelle 12, welche zwischen den Anodenkollektor 5 und die Regenerationselektrode 4 geschaltet ist. Ferner ist die Batteriesteuerung 11 dazu eingerichtet, einen zweiten Strom $I_2$ von der Regenerationselektrode 4 zu dem Kathodenkollektor 6 fließen zu lassen. Dazu umfasst die Batteriesteuerung 11 eine zweite Stromquelle 13, welche zwischen die Regenerationselektrode 4 und den Kathodenkollektor 6 geschaltet ist.

Im Folgenden wird das erfindungsgemäße Verfahren in einer ersten Ausführungsform beschrieben.

Wird das erfindungsgemäße Verfahren in dieser ersten Ausführungsform ausgeführt, so erfolgt zunächst ein Erfassen einer aktuellen Verfügbarkeit von zyklierbarem Lithium in der Anode 2 und zugleich ein Ermitteln einer Fehlmenge an zyklierbaren Lithium in der Anode 2. Dies erfolgt basierend auf einer Verschiebung einer Kennlinie eines Anodenpotentials. Dazu wird eine aktuelle Kennlinie des Anodenpotentials $U_{AN-act}$ zumindest abschnittsweise ermittelt und diese mit einer ursprünglichen Kennlinie des Anodenpotentials $U_{AN-prev}$ verglichen. Die aktuelle Kennlinie des Anodenpotentials $U_{AN-act}$ ist dabei eine Kennlinie des Anodenpotentials zu einem aktuellen Zeitpunkt, zu dem das Verfahren ausgeführt wird, und die ursprüngliche Kennlinie des Anodenpotentials $U_{AN-prev}$ ist eine Kennlinie, welche zu einem Herstellungszeitpunkt der Lithiumionenbatteriezelle 1 ermittelt wurde.

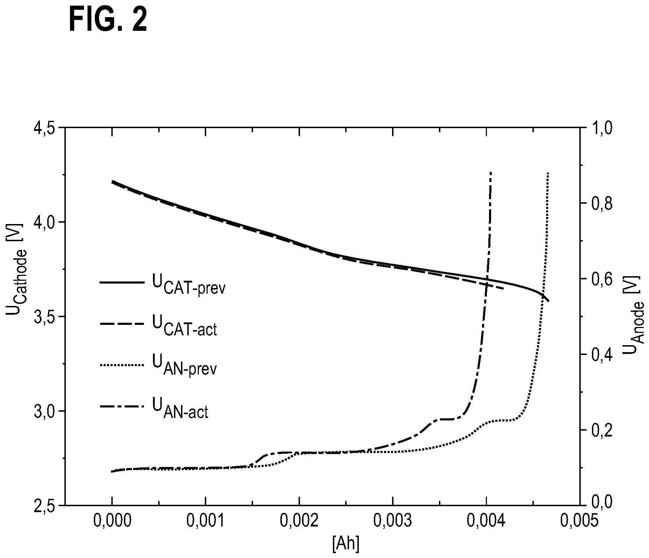

Solche Kennlinien sind beispielhaft in Figur 2 dargestellt. Die ursprüngliche Kennlinie des Anodenpotentials $U_{AN-prev}$ ist mit einer gepunkteten Linie dargestellt.

Es ist ersichtlich, dass diese Kennlinie ein Potential darstellt, welches mit einer Entladung der Lithiumionenbatteriezelle 1 zunächst stetig zunimmt und ab einem gewissen Zeitpunkt steil ansteigt. Die aktuelle Kennlinie des Anodenpotentials $U_{AN-act}$ ist mit einer Strich-Punkt-Linie dargestellt und entspricht in ihrem grundsätzlichen Verlauf der ursprünglichen Kennlinie des Anodenpotentials $U_{AN-prev}$, allerdings steigt diese schon zu einem früheren Entladungszustand der Lithiumionenbatteriezelle 1 steil an.

Ein Abstand zwischen einander entsprechenden Punkten der ursprünglichen Kennlinie des Anodenpotentials $U_{AN-prev}$ und der aktuellen Kennlinie des Anodenpotentials $U_{AN-act}$ ist ein Indikator für die aktuelle Verfügbarkeit von zyklierbarem Lithium in der Anode 2 und zugleich für eine Fehlmenge an zyklierbaren Lithium in der Anode 2, da die Verfügbarkeit hier in Abhängigkeit von einer ursprünglichen Verfügbarkeit beschrieben wird. Dabei ist die aktuelle Verfügbarkeit von zyklierbarem Lithium in der Anode 2 um so kleiner, je größer der Abstand ist, also je mehr die aktuelle Kennlinie des Anodenpotentials $U_{AN-act}$ gegenüber der ursprünglichen Kennlinie des Anodenpotentials $U_{AN-prev}$ verschoben und skaliert ist.

Der Abstand kann beispielsweise ermittelt werden, indem zunächst einander zugehörige Punkte auf der Kennlinie des Anodenpotentials $U_{AN-prev}$ und der aktuellen Kennlinie des Anodenpotentials $U_{AN-act}$ ermittelt werden. So können beispielsweise signifikante Wendepunkte oder maximale Krümmungen der Kennlinien mittels der Maxima in deren ersten und zweiten Ableitungen ermittelt werden und einander zugeordnet werden. Beispielsweise kann so ein Abstand zwischen den Ladungszuständen der Lithiumionenbatteriezelle, zu denen die jeweilige Kennlinie jeweils steil ansteigt, ermittelt werden und als ein Indikator für die aktuelle Verfügbarkeit von zyklierbarem Lithium in der Anode 2 dienen.

Im weiteren Verlauf des Verfahrens erfolgen ein Erfassen einer aktuellen Verfügbarkeit von zyklierbarem Lithium in der Kathode 3 und zugleich ein Ermitteln einer Fehlmenge an zyklierbaren Lithium in der Kathode 3. Dies erfolgt, basierend auf einer Verschiebung einer Kennlinie eines Kathodenpotentials. Dazu wird eine aktuelle Kennlinie des Kathodenpotentials $U_{CAT-act}$ zumindest abschnittsweise ermittelt und diese mit einer ursprünglichen Kennlinie des Kathodenpotentials $U_{CAT-prev}$ verglichen. Die aktuelle Kennlinie des Kathodenpotentials $U_{CAT-act}$ ist dabei eine Kennlinie des Kathodenpotentials zu dem aktuellen Zeitpunkt, zu dem das Verfahren ausgeführt wird, und die ursprüngliche Kennlinie des Kathodenpotentials $U_{CAT-prev}$ ist eine Kennlinie, welche zu dem Herstellungszeitpunkt der Lithiumionenbatteriezelle 1 ermittelt wurde.

Solche Kennlinien sind beispielhaft in Figur 2 dargestellt. Die ursprüngliche Kennlinie des Kathodenpotentials $U_{CAT-prev}$ ist mit einer durchgezogenen Linie dargestellt. Es ist ersichtlich, dass diese Kennlinie ein Potential darstellt, welches mit einer Entladung der Lithiumionenbatteriezelle 1 stetig abnimmt. Die aktuelle Kennlinie des Kathodenpotentials $U_{CAT-act}$ ist mit einer gestrichelten Linie dargestellt und entspricht in ihrem grundsätzlichen Verlauf der ursprünglichen Kennlinie des Kathodenpotentials $U_{CAT-prev}$, allerdings endet die Kennlinie bei einem positiveren Potenzial, weil die Kathode durch den Verlust von zyklierbarem Lithium nicht mehr vollständig lithiiert werden kann. Ein Unterschied zwischen der ursprünglichen Kennlinie des Kathodenpotentials $U_{CAT-prev}$ und der aktuellen Kennlinie des Kathodenpotentials $U_{CAT-act}$ besteht somit darin, dass die Kennlinie des Kathodenpotentials $U_{CAT-act}$ verkürzt ist, das heißt, das ursprüngliche Kathodenpotenzial wird in einem entladenen Zustand der Lithiumionenbatteriezelle 1 nicht mehr erreicht.

Ein Abstand zwischen einem Endpunkt der ursprünglichen Kennlinie des Kathodenpotentials $U_{CAT-prev}$ und einem Endpunkt der aktuelle Kennlinie des Kathodenpotentials $U_{CAT-act}$ ist ein Indikator für die aktuelle Verfügbarkeit von zyklierbarem Lithium in der Kathode 3 und zugleich für eine Fehlmenge an zyklierbaren Lithium in der Kathode 3, da die Verfügbarkeit hier in Abhängigkeit von einer ursprünglichen Verfügbarkeit beschrieben wird. Der Endpunkt der jeweiligen Kennlinie des Kathodenpotentials ist durch ein Kathodenpotenzial im entladenen Zustand der Lithiumionenbatteriezelle 1 beschrieben. Dabei ist die aktuelle Verfügbarkeit von zyklierbarem Lithium in der Kathode 3 umso kleiner, je größer der Abstand zwischen den Endpunkten ist. Der Abstand kann dabei als ein Potentialunterschied zwischen den Endpunkten der Kennlinien des Kathodenpotentials $U_{CAT-act}$ und $U_{CAT-prev}$ beschrieben werden. Das Kathodenpotenzial im entladenen Zustand der Lithiumionenbatteriezelle 1 ist damit ein Maß für den Verlust an zyklierbarem Lithium. Aus der Regenerationselektrode 4 wird somit bevorzugt so lange Lithium in die Kathode 3 interkaliert bis das Kathodenpotenzial im entladenen Zustand einem Kathodenpotenzial der Neuzelle entspricht.

Der Abstand wird in dieser Ausführungsform ermittelt, indem die Lithiumionenbatteriezelle 1 entladen wird und dann das Kathodenpotenzial der Kathode 3 ermittelt wird. Dieses wird mit einem vorab gespeicherten Kathodenpotenzial der Kathode 3 verglichen, welches die Lithiumbatteriezelle 1 zu ihrem Herstellungszeitpunkt in einen entladenen Zustand aufgewiesen hat. Der so ermittelte Abstand dient als ein Indikator für die aktuelle Verfügbarkeit von zyklierbarem Lithium in der Kathode 3.

In einem folgenden Schritt des erfindungsgemäßen Verfahrens in dieser ersten Ausführungsform erfolgt ein Durchleiten eines ersten Stromes $I_1$ zwischen der Anode 2 und der Regenerationselektrode 4, bis die aktuelle Verfügbarkeit von zyklierbarem Lithium in der Anode 2 einer angezielten Verfügbarkeit von zyklierbarem Lithium in der Anode 2 entspricht. Die erfolgt, indem einer aktuell verfügbaren Menge an zyklierbaren Lithium in der Anode 2 die für die Anode 2 ermittelte Fehlmenge hinzugefügt wird. Die angezielte Verfügbarkeit von zyklierbarem Lithium in der Anode 2 ist somit gleich der ursprünglichen Verfügbarkeit von zyklierbarem Lithium in der Anode 2.

Dazu wird die aktuelle Verfügbarkeit von zyklierbarem Lithium in der Anode 2, welche zugleich die Fehlmenge an zyklierbarem Lithium beschreibt, in eine erste Zeitdauer und einen zugehörigen ersten Storm $I_1$ umgesetzt, welcher im weiteren Verlauf des Verfahrens zur Regeneration der Anode 2 genutzt wird. Dazu ist es ausreichend, wenn einmalig im Vorfeld des Verfahrens, beispielsweise bei einer Herstellung der Lithiumionenbatteriezelle 1, ein Verhältnis zwischen der ermittelten Fehlmenge und einer Ladungsmenge ermittelt wird, welche ausreicht, um die Anode 2 derart zu regenerieren, dass die ermittelte Fehlmenge bei einer erneut gemessenen aktuellen Kennlinie des Anodenpotentials $U_{AN-act}$ gegen 0 geht, also die aktuellen Kennlinie des Anodenpotentials $U_{AN-act}$ die ursprüngliche Kennlinie des Anodenpotentials $U_{AN-prev}$ überlagert. So könnte für unterschiedliche Kennlinien des Anodenpotentials $U_{AN-act}$ jeweils ein Ladungswert, hier als ein erster Strom $I_1$ und eine zugehörige erste Zeitdauer, hinterlegt werden. Es ist dabei nicht notwendig, dass die Fehlmenge als eine Mengenangabe bereitsteht.

Der aus der ermittelten Fehlmenge abgeleitete erste Strom $I_1$ wird für die aus der Fehlmenge abgeleiteten ersten Zeitdauer über die Regenerationselektrode 4 und die Anode 2 geleitet. Dazu weist die Batteriesteuerung 11, welche das erfindungsgemäße Verfahren ausführt, die erste Stromquelle 12 auf, die eine Versorgungsspannung mittels kommutierender Transistoren derart regelt, dass der erste Strom $I_1$ durch die Anode 2 fließt. Dies erfolgt für die ermittelte erste Zeitdauer. Es wird somit erkannt, dass die aktuelle Verfügbarkeit von zyklierbaren Lithium in der Anode 2 der angezielten Verfügbarkeit von zyklierbaren Lithium in der Anode 2 entspricht, wenn das Durchleiten des ersten Stromes $I_1$ so lange erfolgt ist, bis die ermittelte Fehlmenge der Anode 2 zugefügt wurde.

In einem folgenden Schritt des erfindungsgemäßen Verfahrens in dieser ersten Ausführungsform erfolgt ein Durchleiten eines zweiten Stromes $I_2$ zwischen der Kathode 3 und der Regenerationselektrode 4, bis die aktuelle Verfügbarkeit von zyklierbarem Lithium in der Kathode 3 einer angezielten Verfügbarkeit von zyklierbarem Lithium in der Kathode 3 entspricht. Die erfolgt, indem einer aktuell verfügbaren Menge an zyklierbaren Lithium in der Kathode 3 die für die Kathode 3 ermittelte Fehlmenge hinzugefügt wird. Die angezielte Verfügbarkeit von zyklierbarem Lithium in der Kathode 3 ist somit gleich der ursprünglichen Verfügbarkeit von zyklierbarem Lithium in der Kathode 3.

Dazu wird die aktuelle Verfügbarkeit von zyklierbarem Lithium in der Kathode 3, welche zugleich die Fehlmenge an zyklierbarem Lithium beschreibt, in eine zweite Zeitdauer und einen zugehörigen zweiten Storm $I_2$ umgesetzt, welcher im weiteren Verlauf des Verfahrens zur Regeneration der Kathode 3 genutzt wird. Dazu ist es ausreichend, wenn einmalig im Vorfeld des Verfahrens, beispielsweise bei einer Herstellung der Lithiumionenbatteriezelle 1, ein Verhältnis zwischen der ermittelten Fehlmenge und einer Ladungsmenge ermittelt wird, welche ausreicht, um die Kathode 3 derart zu regenerieren, dass die ermittelte Fehlmenge bei einer erneut gemessenen aktuellen Kennlinie des Kathodenpotentials $U_{CAT-act}$ gegen 0 geht, also die aktuellen Kennlinie des Kathodenpotentials $U_{CAT-act}$ die ursprüngliche Kennlinie des Kathodenpotentials $U_{CAT-prev}$ überlagert. So könnte für unterschiedliche Kennlinien des Kathodenpotentials $U_{CAT-act}$ jeweils ein Ladungswert, hier als ein zweiter Strom $I_2$ und eine zugehörige zweite Zeitdauer, hinterlegt werden. Es ist dabei nicht notwendig, dass die Fehlmenge als eine Mengenangabe bereitsteht.

Der aus der ermittelten Fehlmenge abgeleitete zweite Strom $I_2$ wird für die aus der Fehlmenge abgeleiteten zweite Zeitdauer über die Regenerationselektrode 4 und die Kathode 3 geleitet. Dazu weist die Batteriesteuerung 11, welche das erfindungsgemäße Verfahren ausführt, die zweite Stromquelle 13 auf, die eine Versorgungsspannung mittels kommutierender Transistoren derart regelt, dass der zweite Strom $I_2$ durch die Kathode 3 fließt. Dies erfolgt für die ermittelte zweite Zeitdauer. Es wird somit erkannt, dass die aktuelle Verfügbarkeit von zyklierbaren Lithium in der Kathode

3 der angezielten Verfügbarkeit von zyklierbaren Lithium in der Kathode 3 entspricht, wenn das Durchleiten des zweiten Stromes I2 so lange erfolgt ist, bis die ermittelte Fehlmenge der Kathode 3 zugefügt wurde.

Es erfolgt somit ein Durchleiten eines ersten Stromes I1 zwischen der Anode 2 und der Regenerationselektrode 4, bis die aktuelle Verfügbarkeit von zyklierbarem Lithium in der Anode 2 einer angezielten Verfügbarkeit von zyklierbarem Lithium in der Anode 2 entspricht, und ein Durchleiten eines zweiten Stromes $I_2$ zwischen der Kathode 3 und der Regenerationselektrode 4, bis die aktuelle Verfügbarkeit von zyklierbarem Lithium in der Kathode 3 einer angezielten Verfügbarkeit von zyklierbarem Lithium in der Kathode 3 entspricht. Die jeweils angezielte Verfügbarkeit von zyklierbarem Lithium ist dabei möglichst nahe an einer ursprünglichen Verfügbarkeit von zyklierbarem Lithium in der Anode 2 und einer ursprünglichen Verfügbarkeit von zyklierbarem Lithium in der Kathode 3, welche diese zu einem Herstellungszeitpunkt der Lithiumionenbatteriezelle 1 aufgewiesen haben.

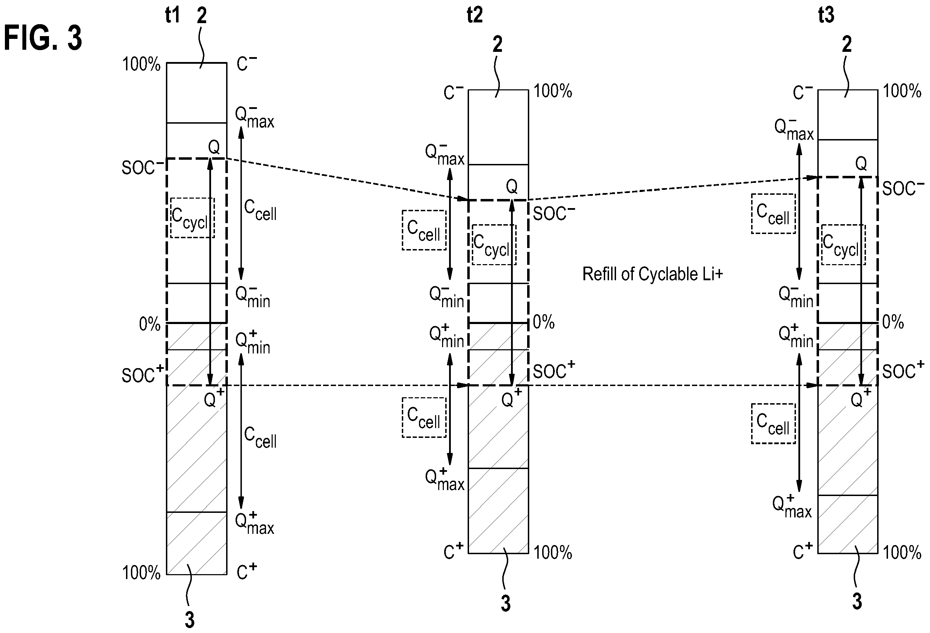

Es wird auf Figur 3 verwiesen. Ganz links in Figur 3 ist eine schematische Darstellung der Lithiumionenbatteriezelle 1 zu deren Lebensanfang zu einem ersten Zeitpunkt t1 dargestellt. Die Lithiumionenbatteriezelle weist maximale Kapazitäten $C^-$ und $C^+$ auf, die eine maximal mögliche Kapazität der Anode und der Kathode beschreiben. Die Lithiumionenbatteriezelle 1 wird jedoch nicht bis zu ihren maximalen Kapazitäten $C^-$ und $C^+$ geladen, um eine Beschädigung der Lithiumionenbatteriezelle 1 zu vermeiden. Daher weist die Lithiumionenbatteriezelle 1 ferner eine nominelle Kapazität $C_{cell}$ auf, bei der die Lithiumionenbatteriezelle 1 jeweils eine maximale nominelle Ladung $Q^-_{max}$ und $Q^+_{max}$ inne hat, die jeweils geringer als die maximalen Kapazitäten $C^-$ und $C^+$ der Anode 2 und der Kathode 3 ist. Diese maximalen Ladung $Q^-_{max}$ und $Q^+_{max}$ beschreiben den maximalen Ladungsgehalt der Lithiumionenbatteriezelle 1, wenn diese vollständig aufgeladen ist. Entsprechend weist die Lithiumionenbatteriezelle 1 minimale Ladungen $Q^-_{max}$ und $Q^-_{min}$ auf, wenn diese entladen ist. Tatsächlich ist die Lithiumionenbatteriezelle 1 in den in Figur 3 gezeigten Zuständen nur zu einem gewissen Anteil aufgeladen. Dies ist anodenseitig mit dem Wert $SOC^-$ und kathodenseitig mit dem Wert $SOC^+$ gekennzeichnet (SOC - state of Charge), welche einen tatsächlichen anodenseitigen Ladungsgehalt der Lithiumbatteriezelle $Q^-$ und einen tatsächlichen kathodenseitigen Ladungsgehalt der Lithiumbatteriezelle $Q^+$ beschreiben. Eine Differenz zwischen diesen Ladungszuständen beschreibt eine tatsächliche Kapazität $C_{cycl}$ der Lithiumionenbatteriezelle 1, also eine Menge an Energie, die der Lithiumionenbatteriezelle 1 entnommen werden kann.

In der mittleren Darstellung der Figur 3 ist die Lithiumionenbatteriezelle 1 zu einem zweiten Zeitpunkt t2 dargestellt, zu dem diese gegenüber dem ersten Zeitpunkt t1 schon gealtert ist. Es ist zum einen ersichtlich, dass die maximalen Kapazitäten $C^-$ und $C^+$ der Lithiumionenbatteriezelle 1 nunmehr geringer sind, was auf unterschiedliche Alterungsvorgänge in der Lithiumionenbatteriezelle 1 zurückzuführen ist. Die Lithiumionenbatteriezelle 1 weist zu dem zweiten Zeitpunkt t2 den gleichen Ladungszustand wie zu dem ersten Zeitpunkt t1 auf. Dennoch ist ersichtlich, dass die tatsächliche Kapazität $C_{cycl}$ nunmehr geringer ist und die maximale Ladung $Q^-_{max}$ und $Q^+_{max}$ abgesunken ist. Dies ist darauf zurückzuführen, dass die Menge an zyklierbarem Lithium in der Anode 2 stark und in der Kathode 3 zumindest geringfügig abgenommen hat.

Auf der rechten Seite in Figur 3 ist die Lithiumionenbatteriezelle 1 zu einem dritten Zeitpunkt t3 dargestellt. Es ist ersichtlich, dass die maximalen Kapazitäten $C^-$ und $C^+$ zu dem dritten Zeitpunkt t3 gleich den maximalen Kapazitäten $C^-$ und $C^+$ zu dem zweiten Zeitpunkt t2 sind, da diese Alterungsprozesse nicht auf einen Verlust von zyklierbarem Lithium zurückzuführen sind. Zwischen dem zweiten Zeitpunkt t2 und dem dritten Zeitpunkt t3 wurde das zuvor beschriebene erfindungsgemäße Verfahren ausgeführt. Es ist ersichtlich, dass die Menge an zyklierbarem Lithium in der Anode 2 deutlich angestiegen ist und in der Kathode 3 zumindest geringfügig angestiegen ist. Die Lithiumionenbatteriezelle 1 befindet sich zu dem dritten Zeitpunkt t3 in demselben Ladungszustand, in dem diese sich auch in dem ersten Zeitpunkt t1 und zu dem zweiten Zeitpunkt t2 befunden hat. Es ist ersichtlich, dass die tatsächliche Kapazität $C_{cycl}$ der Lithiumionenbatteriezelle 1 wieder angestiegen ist.

Es wird also ermöglicht, dass bereits verschwundene Batteriezellenkapazitäten auf eine nicht-invasive Weise regeneriert werden. Zum besseren Verständnis der Figur 3 sei darauf hingewiesen, dass in Lithiumionenbatteriezellen zumeist ein Überschuss an zyklierbarem Lithium auf Anodenseite vorliegt.

Die in der Figur 3 verwendeten Werte können in ihren Zusammenhängen mathematisch wie folgt dargestellt werden:

$$C_{cycl} = Q^+ + Q^- = C^+ SOC^+ + C^- SOC^-$$

$$C_{cell} = Q^+_{max} - Q^+_{min} = Q^-_{max} - Q^-_{min}$$

Der Ladungsinhalt $Q_{cell}$ der Lithiumionenbatteriezelle 1 ergibt sich dabei wie folgt:

$$Q_{cell} = Q^+ - Q^+_{min} = Q^- - Q^-_{min}$$

Somit kann eine Leerlaufspannung $OCV_{cell}$ der Lithiumionenbatteriezelle 1 als folgende Funktion dargestellt werden:

$$OCV_{cell} = OCP^+ (SOC^+) - OCP^- (SOC^-) = OCP^+ (Q^+ / C^+) - OCP^- (Q^- / C^-)$$

Dabei beschreibt die Funktion $OCP^- (SOC^-)$ die Kennlinie des Anodenpotentials und die Funktion $OCP^+ (SOC^+)$ die Kennlinie des Kathodenpotentials.

Bei einem normalem Laden und Entladen der Lithiumionenbatteriezelle 1 besteht keine leitende Verbindung zwischen der Regenerationselektrode 4, der Kathode 3 und der Anode 2. Beim Laden der Lithiumionenbatteriezelle 1 oder beim Entladen der Lithiumionenbatteriezelle 1 kann wahlweise stromlos die Spannung zwischen der Regenerationselektrode 4 und der Anode 2 oder der Kathode 3 gemessen werden und so eine Ladespannung oder Entladespannung gegen die Regenerationselektrode 4 bestimmt und gesteuert werden. Hier fungiert die Regenerationselektrode 4 als eine Referenzelektrode. Somit wird es unter anderem auch ermöglicht, die aktuelle Kennlinie des Anodenpotentials $U_{AN-act}$ oder die aktuelle Kennlinie des Kathodenpotentials $U_{CAT-act}$ zu bestimmen. Weichen die Kennlinien des Anodenpotentials und/oder des Kathodenpotentials von denen einer neuen Lithiumionenbatteriezelle 1 ab, so ist dies ein Indiz dafür, dass ein Verlust von zyklierbarem Lithium eingetreten ist. Um diesen Verlust auszugleichen, kann das erfindungsgemäße Verfahren zu definierten Zeitpunkten durchgeführt werden, wobei die Regenerationselektrode 4 gegenüber der Kathode 3 oder die Anode 2 so geschaltet wird, dass Lithium aus der lithiumhaltigen metallischen Regenerationselektrode 4 in das Material der Kathode 3 oder das Material der Anode 2 interkaliert wird, wobei jeweils ein Strom über die elektrische Verbindung zwischen der Regenerationselektrode 4 und der Anode 2 oder der Regenerationselektrode 4 und der Kathode 3 fließt. Ein Lithiumverlust im Material der Kathode 3, beispielsweise durch Bildung einer SEI-Schicht (Solid Electrolyte Interface) auf der Anodenseite kann damit ausgeglichen werden. Wird Lithium aus der lithiumhaltigen metallischen Regenerationselektrode 4 in die Anode 2 interkaliert, kann es von dort aus auch zur Kathode 3 transportiert und zur Wiederherstellung der ursprünglichen Kathodenkapazität genutzt werden.

Die erfindungsgemäße Lithiierung über die Regenerationselektrode 4 findet bevorzugt so lange statt, bis die Potentiale an Anode 2 oder Kathode 3 den Potentialen der Lithiumionenbatteriezelle 1 zu deren Herstellungszeitpunkt entsprechen. Damit ist der Verlust an zyklierbarem Lithium wieder ausgeglichen.

Alternativ kann bei genauer Kenntnis des Verlusts an zyklierbarem Lithium als Funktion der Zyklenzahl bzw. als Funktion der Zeit die Lithiumelektrode immer nach einer bestimmten Zyklenzahl oder einem bestimmten Zeitraum zugeschaltet werden.

Nebst obenstehender Offenbarung wird explizit auf die Offenbarung der Figuren 1 bis 3 verwiesen.

## Patentansprüche

1. Verfahren zum Steuern eines Regenerationsvorganges einer Lithiumionenbatteriezelle (1), welche eine Anode (2), eine Kathode (3) und eine zwischen der Anode (2) und der Kathode (3) positionierte und parallel zu Großflächen der Anode (2) oder Kathode (3) ausgerichtete Regenerationselektrode (4) umfasst, umfassend:

   - ein Erfassen einer aktuellen Verfügbarkeit von zyklierbarem Lithium in der Anode (2),
   - ein Erfassen einer aktuellen Verfügbarkeit von zyklierbarem Lithium in der Kathode (3),
   - ein Durchleiten eines ersten Stromes ($I_1$) zwischen der Anode (2) und der Regenerationselektrode (4) bis die aktuelle Verfügbarkeit von zyklierbarem Lithium in der Anode (2) einer angezielten Verfügbarkeit von zyklierbarem Lithium in der Anode (2) entspricht, und
   - ein Durchleiten eines zweiten Stromes ($I_2$) zwischen der Kathode (3) und der Regenerationselektrode (4) bis die aktuelle Verfügbarkeit von zyklierbarem Lithium in der Kathode (3) einer angezielten Verfügbarkeit von zyklierbarem Lithium in der Kathode (3) entspricht.

2. Verfahren gemäß Anspruch 1, **dadurch gekennzeichnet, dass** dieses ferner folgende Schritte umfasst:

   - ein Ermitteln einer Fehlmenge an zyklierbarem Lithium in der Anode (2), wobei erkannt wird, dass die aktuelle Verfügbarkeit von zyklierbarem Lithium in der Anode (2) der angezielten Verfügbarkeit von zyklierbarem Lithium in der Anode (2) entspricht, wenn das Durchleiten des ersten Stromes ($I_1$) so lange erfolgt ist, bis die ermittelte Fehlmenge der Anode (2) zugefügt wurde, und/oder

- ein Ermitteln einer Fehlmenge an zyklierbarem Lithium in der Kathode (3), wobei erkannt wird, dass die aktuelle Verfügbarkeit von zyklierbarem Lithium in der Kathode (3) der angezielten Verfügbarkeit von zyklierbarem Lithium in der Kathode (3) entspricht, wenn das Durchleiten des zweiten Stromes ($I_2$) so lange erfolgt ist, bis die ermittelte Fehlmenge der Kathode (3) zugefügt wurde.

3. Verfahren gemäß einem der vorhergehenden Ansprüche, **dadurch gekennzeichnet, dass** die aktuellen Verfügbarkeit von zyklierbarem Lithium in der Anode (2) und/oder die aktuellen Verfügbarkeit von zyklierbarem Lithium in der Kathode (3) basierend auf einem Gesundheitszustand oder einem Alterungszustand der Lithiumionenbatteriezelle (1) ermittelt wird.

4. Verfahren gemäß einem der vorhergehenden Ansprüche, **dadurch gekennzeichnet, dass** die aktuelle Verfügbarkeit von zyklierbarem Lithium in der Anode (2) basierend auf einer Änderung einer Kennlinie eines Anodenpotentials ermittelt wird und/oder die aktuelle Verfügbarkeit von zyklierbarem Lithium in der Kathode (3) basierend auf einer Änderung einer Kennlinie eines Kathodenpotentials ermittelt wird.

5. Batteriesteuerung (11), die dazu eingerichtet ist, das Verfahren gemäß einem der vorhergehenden Ansprüche auszuführen, umfassend eine Elektronik, die dazu eingerichtet ist, den ersten und den zweiten Strom ($I_1$, $I_2$) mittels kommutierender Transistoren zu regeln.

6. Batterie, umfassend eine Batteriesteuerung (11) gemäß Anspruch 5 umfassend die Lithiumionenbatteriezelle (1), wobei die Regenerationselektrode (4) derart in der Lithiumionenbatteriezelle (1) angeordnet ist, dass deren Potential zwischen einem Potential der Anode (2) und einem Potential der Kathode (3) liegt.

## Claims

1. Method for controlling a regeneration process of a lithium-ion battery cell (1) that comprises an anode (2), a cathode (3) and a regeneration electrode (4) positioned between the anode (2) and the cathode (3) and oriented parallel to large surfaces of the anode (2) or cathode (3), comprising:

   - sensing a current availability of cyclable lithium in the anode (2),
   - sensing a current availability of cyclable lithium in the cathode (3),
   - passing a first current ($I_1$) between the anode (2) and the regeneration electrode (4) until the current availability of cyclable lithium in the anode (2) corresponds to a target availability of cyclable lithium in the anode (2), and
   - passing a second current ($I_2$) between the cathode (3) and the regeneration electrode (4) until the current availability of cyclable lithium in the cathode (3) corresponds to a target availability of cyclable lithium in the cathode (3).

2. Method according to Claim 1, **characterized in that** it additionally comprises the following steps:

   - determining a deficit of cyclable lithium in the anode (2), wherein it is identified that the current availability of cyclable lithium in the anode (2) corresponds to the target availability of cyclable lithium in the anode (2) if the passing of the first current ($I_1$) is effected until the determined deficit has been supplied to the anode (2), and/or
   - determining a deficit of cyclable lithium in the cathode (3), wherein it is identified that the current availability of cyclable lithium in the cathode (3) corresponds to the target availability of cyclable lithium in the cathode (3) if the passing of the second current ($I_2$) is effected until the determined deficit has been supplied to the cathode (3).

3. Method according to either one of the preceding claims, **characterized in that** the current availability of cyclable lithium in the anode (2) and/or the current availability of cyclable lithium in the cathode (3) is/are determined on the basis of a state of health or an ageing state of the lithium-ion battery cell (1).

4. Method according to any one of the preceding claims, **characterized in that** the current availability of cyclable lithium in the anode (2) is determined on the basis of a change in a characteristic curve of an anode potential, and/or the current availability of cyclable lithium in the cathode (3) is determined on the basis of a change in a characteristic curve of a cathode potential.

5. Battery control system (11), which is designed to execute the method according to any one of the preceding claims comprising electronics that are designed to regulate the first and the second current ($I_1$, $I_2$) by means of commutating transistors.

6. Battery, comprising a battery control system (11) according to Claim 5, comprising the lithium-ion battery cell (1), wherein the regeneration electrode (4) is disposed in the lithium-ion battery cell (1) in such a manner that its potential is between a potential of the anode (2) and a potential of the cathode (3).


**Revendications**

1. Procédé de commande d'un processus de régénération d'un élément de batterie lithium-ion (1) comportant une anode (2), une cathode (3) et une électrode de régénération (4) placée entre l'anode (2) et la cathode (3) et orientée parallèlement à de grandes surfaces de l'anode (2) ou de la cathode (3), le procédé comprenant les étapes suivantes :

   - détecter une disponibilité actuelle de lithium cyclable dans l'anode (2),
   - détecter une disponibilité actuelle de lithium cyclable dans la cathode (3),
   - faire passer un premier courant ($I_1$) entre l'anode (2) et l'électrode de régénération (4) jusqu'à ce que la disponibilité actuelle de lithium cyclable dans l'anode (2) corresponde à une disponibilité ciblée de lithium cyclable dans l'anode (2), et
   - faire passer un deuxième courant ($I_2$) entre la cathode (3) et l'électrode de régénération (4) jusqu'à ce que la disponibilité actuelle de lithium cyclable dans la cathode (3) corresponde à une disponibilité ciblée de lithium cyclable dans la cathode (3).

2. Procédé selon la revendication 1, **caractérisé en ce qu'**il comprend en outre les étapes suivantes :

   - déterminer une quantité manquante de lithium cyclable dans l'anode (2), étant reconnu que la disponibilité actuelle de lithium cyclable dans l'anode (2) correspond à la disponibilité ciblée de lithium cyclable dans l'anode (2) lorsque le passage du premier courant ($I_1$) est effectué jusqu'à ce que la quantité manquante déterminée ait été acheminée à l'anode (2) et/ou
   - déterminer une quantité manquante de lithium cyclable dans la cathode (3), étant reconnu que la disponibilité actuelle de lithium cyclable dans la cathode (3) correspond à la disponibilité ciblée de lithium cyclable dans la cathode (3) lorsque le passage du deuxième courant ($I_2$) est effectué jusqu'à ce que la quantité manquante déterminée ait été acheminée à la cathode (3).

3. Procédé selon l'une des revendications précédentes, **caractérisé en ce que** la disponibilité actuelle de lithium cyclable dans l'anode (2) et/ou la disponibilité actuelle de lithium cyclable dans la cathode (3) est déterminé en fonction d'un état de santé ou d'un état de vieillissement de l'élément de batterie lithium-ion (1).

4. Procédé selon l'une des revendications précédentes, **caractérisé en ce que** la disponibilité actuelle de lithium cyclable dans l'anode (2) est déterminée en fonction d'un changement de caractéristique d'un potentiel d'anode et/ou la disponibilité actuelle de lithium cyclable dans la cathode (3) est déterminée en fonction d'un changement de caractéristique du potentiel de cathode.

5. Commande de batterie (11) adapté pour mettre en oeuvre le procédé selon l'une des revendications précédentes, la commande de batterie comprenant une électronique qui est adaptée pour commander les premier et deuxième courants ($I_1$, $I_2$) au moyen de transistors de commutation.

6. Batterie comprenant une commande de batterie (11) selon la revendication 5 et l'élément de batterie lithium-ion (1), l'électrode de régénération (4) étant disposée dans l'élément de batterie lithium-ion (1) de sorte que son potentiel est situé entre un potentiel de l'anode (2) et un potentiel de la cathode (3).

# FIG. 1

# FIG. 2

FIG. 3

Refill of Cyclable Li+

EP 3 314 688 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008002626 A